# EUROPÄISCHE PATENTSCHRIFT

(11) **EP 4 180 761 B1**
(45) Veröffentlichungstag und Bekanntmachung des Hinweises auf die Patenterteilung: **26.03.2025**
(21) Anmeldenummer: 22188004.0
(22) Anmeldetag: 01.08.2022
(51) Int. Cl.: G01B 11/03, B23Q 17/09, B23Q 17/24

(54) **VERFAHREN ZUR VERMESSUNG VON WERKZEUGEN**
METHOD FOR MEASURING TOOLS
PROCÉDÉ DE MESURE D'OUTILS

(30) Priorität: 16.11.2021 DE 102021212866
(43) Veröffentlichungstag der Anmeldung: 17.05.2023
(73) Patentinhaber: Dr. Johannes Heidenhain GmbH, 83301 Traunreut (DE)
(72) Erfinder: Butzhammer, Michael, 83233 Bernau (DE); Görsch, Robert, 83278 Traunstein (DE); Kolb, Peter, 83224 Grassau (DE); Müller, Josef, 84489 Burghausen (DE); Riedi, Mathias, 83278 Traunstein (DE)

(56) Entgegenhaltungen:
- US-B1- 6 191 856
- SHAHABI H H ET AL: "Assessment of flank wear and nose radius wear from workpiece roughness profile in turning operation using machine vision", THE INTERNATIONAL JOURNAL OF ADVANCED MANUFACTURING TECHNOLOGY, SPRINGER, BERLIN, DE, vol. 43, no. 1-2, 13 August 2008 (2008-08-13), pages 11 - 21, XP019700678, ISSN: 1433-3015

## Beschreibung

### GEBIET DER TECHNIK

Die Erfindung betrifft ein Verfahren zur Vermessung von Werkzeugen nach einem optischen Prinzip gemäß dem Anspruch 1.

In Bearbeitungsmaschinen beziehungsweise in Werkzeugmaschinen werden Werkstücke häufig mit Hilfe von spanabhebenden Werkzeugen bearbeitet. Um den Einfluss von verschleißbedingten Formänderungen des Werkzeuges für eine präzise Bearbeitung berücksichtigen zu können, werden üblicherweise die Werkzeuge in vorgegebenen Zeitintervallen mit hoher Genauigkeit vermessen. Häufig geschieht dies in einer Messmaschine beziehungsweise in Inspektionsgeräten außerhalb der Werkzeugmaschine.

### STAND DER TECHNIK

Aus der DE 10 2018 006 652 A1 ist ein Verfahren zum Kontrollieren eines Werkzeuges bekannt, bei dem ein Messstrahl eines Lasers durch das Werkzeug abgeschattet wird. Ein Laserstrahlempfänger gibt ein Signal aus, das für das Maß der Abschattung repräsentativ ist.

In der DE 10 2016 224 000 A1 wird ein Verfahren beschrieben, mit dem mit Hilfe einer Dunkelfeldbeleuchtung ein Werkzeugbruch detektiert wird.

Aus der Patentschrift US 6,191,856 B1 ist ein Verfahren zur Bestimmung der räumlichen Ausrichtung eines Bohrwerkzeugs bekannt. Dort wird das Bohrwerkzeug durch mehrere Lichtquellen aus unterschiedlichen Richtungen angestrahlt und das reflektierte Licht von Kameras erfasst.

### ZUSAMMENFASSUNG DER ERFINDUNG

Der Erfindung liegt die Aufgabe zu Grunde, ein Verfahren zu schaffen, durch welche zumindest eine Abmessung eines Werkzeuges mit Schneiden hochgenau bestimmt werden kann, wobei die zugehörige Vorrichtung in einem Bearbeitungsraum einer Bearbeitungsmaschine betrieben werden kann.

Diese Aufgabe wird erfindungsgemäß durch die Merkmale des Anspruches 1 gelöst.

Eine zur Durchführung des Verfahrens geeignete Vorrichtung dient zur Bestimmung einer Abmessung, beispielsweise des relevanten Durchmessers oder der Länge, eines Werkzeuges mit Schneiden. Die Vorrichtung umfasst eine erste Lichtquelle, so dass von der ersten Lichtquelle Licht parallel zu einer ersten Achse emittierbar ist. Weiterhin umfasst die Vorrichtung einen Bildsensor, dem eine zweite Achse (optische Achse) zugeordnet werden kann, welche orthogonal zum Bildsensor verläuft. Schließlich umfasst die Vorrichtung eine Auswerteeinheit, also eine elektronische Schaltung zur Auswertung der von dem Bildsensor gelieferten Signale. Die erste Achse und die zweite Achse sind zueinander geneigt angeordnet, also insbesondere nicht parallel zueinander ausgerichtet. Ferner ist die Vorrichtung so eingerichtet, dass von der ersten Lichtquelle emittiertes Licht von der Schneide des Werkzeuges so reflektiert werden kann, dass durch das reflektierte Licht auf dem Bildsensor aneinandergereihte Lichtpunkte (beziehungsweise ein Reflexband) erzeugbar sind. Durch die Auswerteeinheit sind Positionen der Lichtpunkte bestimmbar, wobei die Abmessung des Werkzeuges basierend auf den Positionen der Lichtpunkte auf dem Bildsensor bestimmbar ist.

Die Bestimmung der Abmessung des Werkzeuges wird also hier nicht in einem Durchlichtverfahren vorgenommen, bei dem eine Lichtquelle Licht parallel zur optischen Achse des Bildsensors emittiert. Vielmehr ist die Vorrichtung so eingerichtet, dass hier ein Dunkelfeldverfahren zu Einsatz kommen kann. Dadurch wird die Möglichkeit eröffnet, dass die Vorrichtung mit den Merkmalen des Anspruches 1 vergleichsweise kompakt ausgestaltet ist, aber dennoch mit hoher Genauigkeit arbeitet.

Die erste Lichtquelle kann so ausgestaltet sein, dass diese parallele Lichtstrahlen emittiert. Vorzugsweise kann bei dieser Ausgestaltung eine Laserlichtquelle verwendet werden, die von sich aus parallele Lichtstrahlen emittiert oder eine Kollimatoroptik aufweist. Alternativ kann die erste Lichtquelle auch Lichtstrahlen emittieren, die gebündelt sind oder konvergieren. In diesem Zusammenhang können mit Vorteil LEDs, insbesondere mit einer fokussierenden Optik, verwendet werden. Die erste Achse verläuft dann bevorzugt durch den Brennpunkt der ersten Lichtquelle.

Mit Vorteil ist die Vorrichtung so ausgestaltet, dass in der Auswerteeinheit zumindest eine Referenzkoordinate abspeicherbar ist, wobei die Abmessung des Werkzeuges durch Kombination einer Position zumindest einer der Lichtpunkte mit der Referenzkoordinate bestimmbar ist. Die Auswerteeinheit beziehungsweise die betreffende elektronische Schaltung befindet sich vorzugsweise in der Vorrichtung. Sie kann aber auch außerhalb der Vorrichtung verortet sein, beispielsweise kann eine Steuerung der Bearbeitungsmaschine die Auswerteeinheit umfassen oder sie kann in einem separaten Gerät angeordnet sein.

In weiterer Ausgestaltung der Erfindung ist die Auswerteeinheit so eingerichtet, dass durch diese die Abmessung des Werkzeuges mit Hilfe einer Ausgleichsrechnung basierend auf den Positionen mehrerer Lichtpunkte bestimmbar ist.

Gemäß einer Weiterbildung der Erfindung ist die Vorrichtung so eingerichtet, dass sich die erste Achse und die zweite Achse schneiden. Dabei ist der Schnittwinkel zwischen der ersten Achse und der zweiten Achse größer als 75°. Die beiden Achsen schneiden sich also so im Raum, dass in der von ihnen aufgespannten Ebene zwei Paare zueinander kongruenter Scheitelwinkel entstehen. Der kleinere dieser beiden Scheitelwinkel ist gemäß den allgemein üblichen Definitionen der Schnittwinkel. Der Schnittwinkel der betreffenden Achsen im Raum kann demzufolge höchstens 90° betragen. Mit Vorteil ist die Vorrichtung so ausgestaltet, dass beträgt der Schnittwinkel zwischen der ersten Achse und der zweiten Achse 90° beträgt.

Vorzugsweise ist die Vorrichtung so ausgestaltet, dass diese dazu bestimmt ist an einer Fläche eines Maschinentisches montiert zu werden, die sich in einer ersten Ebene erstreckt. Diese erste Ebene ist parallel zur zweiten Achse orientiert, wobei die erste Lichtquelle so angeordnet ist, dass die erste Achse schräg zur ersten Ebene verläuft. Demnach durchdringt die erste Achse die erste Ebene in einem Winkel, der von 90° abweicht.

In weiterer Ausgestaltung der Erfindung verlaufen die erste Achse und die zweite Achse in einer zweiten Ebene, wobei die zweite Ebene relativ zur ersten Ebene um einen Winkel größer als 20° geneigt ist, mit Vorteil größer als 30° oder größer als 40°.

Weiterhin kann die Vorrichtung eine zweite Bilderfassungseinheit umfassen, die einen zweiten Bildsensor aufweist, dem eine dritte Achse zugeordnet werden kann, welche orthogonal zum zweiten Bildsensor und zur zweiten Achse verläuft.

Die Erfindung umfasst ein Verfahren zur Bestimmung einer Abmessung eines Werkzeuges mit Schneiden. Hierbei wird das von der ersten Lichtquelle emittierte Licht von der Schneide des Werkzeuges so reflektiert, dass durch das reflektierte Licht auf dem Bildsensor aneinandergereihte Lichtpunkte erzeugt werden. Durch die Auswerteeinheit werden Positionen der Lichtpunkte bestimmt und basierend auf den Positionen der Lichtpunkte die Abmessung des Werkzeuges bestimmt.

Mit Vorteil wird die Vorrichtung in einem Bearbeitungsraum montiert, in dem später durch das Werkzeug eine spanabhebende Bearbeitung eines Werkstücks durchgeführt wird. Nach der Montage der Vorrichtung werden Positionswerte, durch die eindeutig die Position der Vorrichtung im Bearbeitungsraum bestimmt ist, ermittelt. Zur Bestimmung der erforderlichen Positionswerte kann vorzugsweise ein antastendes Verfahren angewendet werden. Basierend auf den Positionswerten werden Referenzkoordinaten für die Position des Bildsensors und die Orientierung der ersten Achse im Bearbeitungsraum bestimmt. Demnach ist nach diesem Verfahrensschritt die exakte Position und Ausrichtung des Bildsensors im Koordinatensystem des Bearbeitungsraumes bekannt.

Vorteilhafterweise wird vor der Bestimmung der Abmessung des Werkzeuges ein Referenzkörper mit einem Werkzeughalter der Bearbeitungsmaschine verbunden. Dieser Referenzkörper wird dann vor der Vorrichtung platziert und mit Hilfe des Bildsensors vermessen, also dessen Abmessung bestimmt, unter Verwendung der ersten Lichtquelle. Vorzugsweise weist der Referenzkörper ebenfalls Schneiden oder schneidenartige Kanten auf. Während der darauffolgenden Bestimmung der Abmessung des Werkzeuges ist dieses ebenfalls mit dem Werkzeughalter der Bearbeitungsmaschine verbunden. Basierend auf den Ergebnissen der Vermessung des Referenzkörpers wird ein Korrekturwert gebildet, welcher die Information der exakten Lage des Werkzeughalters relativ zu den Referenzkoordinaten des Bildsensors beinhaltet. Der Korrekturwert wird dann abgespeichert, beispielsweise in der Auswerteeinheit oder Steuerung oder in einem weiteren Gerät.

Mit Vorteil wird vor oder nach der Bestimmung der Abmessung des Werkzeuges das Werkzeug, insbesondere eine oder mehrere Schneiden des Werkzeuges, qualitativ begutachtet. Zu diesem Zweck kann die Vorrichtung insbesondere eine zweite Bilderfassungseinheit umfassen, die einen zweiten Bildsensor aufweist. Dem zweiten Bildsensor kann eine dritte (optische) Achse zugeordnet werden, welche orthogonal zum zweiten Bildsensor und zur zweiten Achse verläuft. Dadurch kann eine weitere Ansicht auf das Werkzeug erzeugt werden.

Gemäß einem weiteren Aspekt der Erfindung umfasst die Vorrichtung zudem eine Steuerung zur Verarbeitung von Steuerbefehlen und deren Umsetzung in Bewegungsabläufe des Werkzeughalters in zumindest einer Richtungsachse. Außerdem umfasst die Vorrichtung gemäß dem weiteren Aspekt zumindest ein Positionsmessgerät zur Ermittlung von Ist-Positionen des Werkzeughalters entlang der zumindest einen Richtungsachse. Entsprechende Ist-Positionswerte oder Positionssignale des Werkzeughalters beziehungsweise des daran befestigten Werkzeuges werden der Steuerung zur Lageregelung zugeführt. Das Positionsmessgerät dient bei der Bestimmung der Abmessung des Werkzeuges, also außerhalb eines Bearbeitungsprozesses, zur Bestimmung der Position des Werkzeuges.

Vorteilhafte Ausbildungen der Erfindung entnimmt man den abhängigen Ansprüchen.

Weitere Einzelheiten und Vorteile des erfindungsgemäßen Verfahrens ergeben sich aus der nachfolgenden Beschreibung eines Ausführungsbeispiels anhand der beiliegenden Figuren.

### KURZE BESCHREIBUNG DER ZEICHNUNGEN

- Figur 1: eine perspektivische Ansicht der Vorrichtung zur Bestimmung einer Abmessung eines Werkzeuges,
- Figur 2: eine Seitenansicht auf das Werkzeug,
- Figur 3: eine schematische Darstellung einer Bearbeitungsmaschine mit Steuerung und der Vorrichtung zur Bestimmung einer Abmessung des Werkzeuges,
- Figur 4: ein Ablaufdiagramm für ein Verfahren zur Bestimmung einer Abmessung des Werkzeuges,
- Figur 5: eine Darstellung von empfangenen Lichtpunkten sowie eine Auswertungsgrafik.

### BESCHREIBUNG DER AUSFÜHRUNGSFORMEN

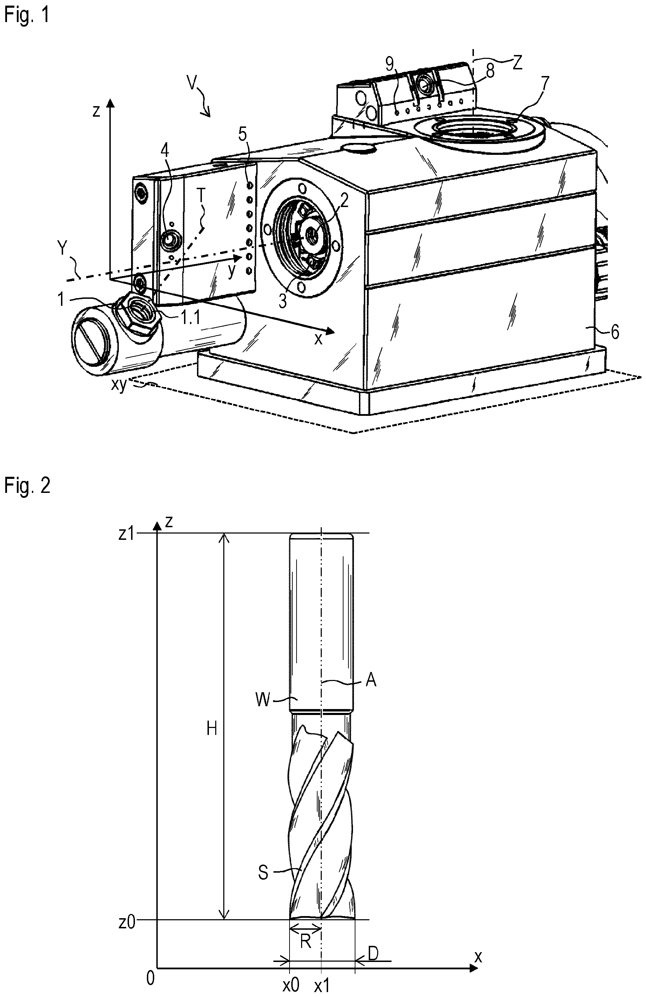

Die Figur 1 zeigt ein Ausführungsbeispiel für die Vorrichtung V. Die Vorrichtung V umfasst eine erste Lichtquelle 1, hier eine Laserdiode, mit einem Kollimator 1.1. Im Betrieb der Vorrichtung emittiert die erste Lichtquelle 1 Licht parallel zu einer ersten Achse T.

Ferner umfasst die Vorrichtung V einen Bildsensor 2, beispielsweise einen CMOS-Sensor oder einen CCD-Sensor. Vor dem Bildsensor 2 ist eine Linse angeordnet, die so ausgestaltet ist, dass auf dem Bildsensor 2 eine entozentrische Abbildung erreichbar ist. Dem Bildsensor 2 kann eine zweite Achse Y zugeordnet werden, die orthogonal zum Bildsensor 2 orientiert ist. Radial neben dem Bildsensor 2 befindet sich eine zweite Lichtquelle 3, die im vorgestellten Ausführungsbeispiel als ein Ringlicht bestehend aus mehreren LEDs, ausgestaltet ist, die um die zweite Achse Y herum angeordnet sind.

Die Vorrichtung V ist dazu bestimmt an einer Fläche eines Maschinentisches montiert zu werden, die sich in einer ersten Ebene xy erstreckt. Diese erste Ebene xy ist parallel zur zweiten Achse Y orientiert, wobei die erste Lichtquelle 1 so angeordnet ist, dass die erste Achse T schräg zur ersten Ebene xy verläuft. Die erste Achse T und die zweite Achse Y verlaufen gemäß der Figur 1 in einer zweiten Ebene die relativ zur ersten Ebene xy geneigt ist. Im vorgestellten Ausführungsbeispiel beträgt der Winkel zwischen der ersten Ebene xy und der zweiten Ebene 45°.

Sowohl der Bildsensor 2 samt Linse sowie die zweite Lichtquelle 3 sind durch eine transparente Scheibe abgedeckt, die im vorgestellten Ausführungsbeispiel kreisrund ausgestaltet ist. Die Vorrichtung V soll in einem Bearbeitungsraum einer Werkzeugmaschine beziehungsweise einer Bearbeitungsmaschine installiert werden. Dort ist im Allgemeinen mit einer Verschmutzung der Vorrichtung V durch Kühl-Schmier-Mittel und / oder Spänen zu rechnen. Derartige Verschmutzungen können von der transparenten Scheibe wirksam mit Hilfe von Druckluft, die aus Düsen einer ersten Düseneinheit 5 mit hoher Geschwindigkeit strömt entfernt werden. Die Vorrichtung V weist zudem eine dritte Lichtquelle 4 auf.

Außerdem umfasst die Vorrichtung V eine zweite Bilderfassungseinheit 7 die in der Figur 1 oben zu sehen ist. Die Bilderfassungseinheit 7 weist einen zweiten Bildsensor auf, dessen optische Achse, im Folgenden als dritte Achse Z bezeichnet, senkrecht zur optischen Achse des Bildsensors 2 beziehungsweise zur zweiten Achse Y angeordnet ist. Zudem umfasst die zweite Bilderfassungseinheit 7 eine weitere insbesondere ringförmige Lichtquelle. Zur Entfernung von Verunreinigungen sind im Bereich der zweiten Bilderfassungseinheit 7 eine zweite Düseneinheit 9 angebracht, aus der Druckluft strömen kann. Außerdem verfügt die Vorrichtung V im Bereich der zweiten Bilderfassungseinheit 7 über eine vierte Lichtquelle 8.

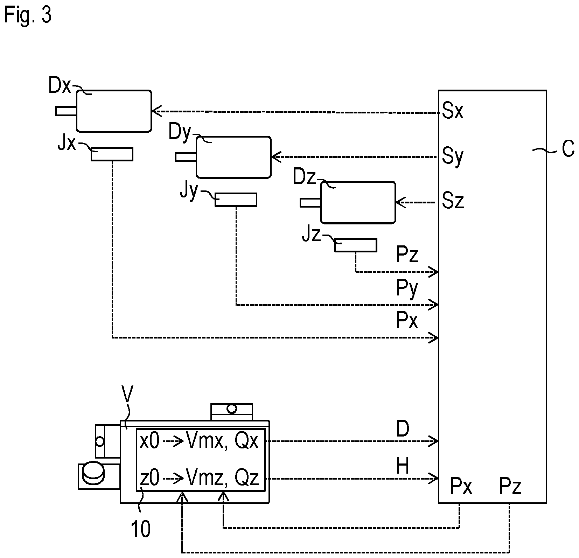

Die Komponenten der Vorrichtung 1 sind von einem Gehäuse 6 umgeben, das vor äußeren Einflüssen schützt und hermetisch dicht ist. In dem Gehäuse 6 befindet sich im vorgestellten Ausführungsbeispiel zudem eine in der Figur 1 nicht dargestellte Auswerteeinheit 10 (siehe Figur 3).

In der Figur 2 ist ein Werkzeug W gezeigt, hier ein Fräswerkzeug mit wendelförmigen Schneiden S, sowie ein zugeordnetes Koordinatensystem mit den Richtungsachsen x, y, z. Das Werkzeug W dreht sich während der Bearbeitung um eine Werkzeugachse A. Zur präzisen Bearbeitung von Werkstücken ist es notwendig in vorbestimmten Zeitintervallen Abmessungen D, H, hier den Durchmesser und die Länge des Werkzeuges W zu bestimmen, da sich diese verschleißbedingt im Betrieb verändern.

Die Figur 3 zeigt schematisch Elemente der Bearbeitungsmaschine, insbesondere einer Werkzeugmaschine, sowie die Vorrichtung V zur Bestimmung der Abmessungen D, H des Werkzeuges W. Demnach umfasst die Bearbeitungsmaschine eine Steuerung C. Die Steuerung C dient unter anderem dazu programmierte Steuerbefehle zu verarbeiten und in Bewegungsabläufe umzusetzen. Hierzu werden von der Steuerung C Steuersignale Sx, Sy, Sz an Antriebe Dx, Dy, Dz übertragen, die bewirken, dass ein Werkzeughalter, insbesondere mit dem daran fixierten Werkzeug W, entlang der ersten Richtungsachse x, einer zweiten Richtungsachse y und der dritten Richtungsachse z (Figur 1) im Bearbeitungsraum bewegt wird. Die Ist-Positionen werden durch Positionsmessgeräte Jx, Jy, Jz für die jeweiligen Richtungsachsen x, y, z erfasst. Entsprechende Ist-Positionswerte des Werkzeuges W beziehungsweise Positionssignale Px, Py, Pz werden dann der Steuerung C zur Lageregelung, wie bei CNC-Maschinen üblich, zugeführt. Eine entsprechende Bearbeitungsmaschine kann im Übrigen auch über mehr als die drei oben genannten Bewegungsachsen verfügen. Bei der Berechnung der Steuersignale Sx, Sy, Sz müssen die Abmessungen D, H des Werkzeuges W berücksichtigt werden, damit eine Materialabtragung exakt an der gewünschten Stelle des Werkstückes erfolgt. Üblicherweise wurden daher Werkzeuge vor Beginn des Bearbeitungsprozesses außerhalb des Bearbeitungsraumes vermessen und die relevanten Abmessungen in einer Tabelle vorzugsweise in der Steuerung C elektronisch hinterlegt.

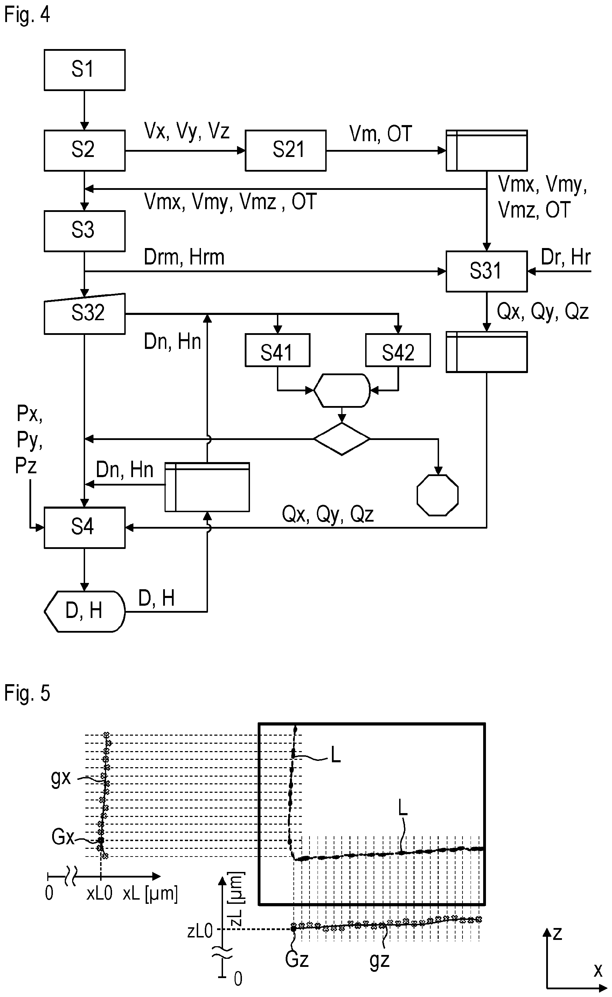

Durch die Erfindung kann eine präzise Bestimmung von Abmessungen D, H des Werkzeuges W mit den Schneiden S im Bearbeitungsraum erfolgen. Hierzu werden im vorgestellten Ausführungsbeispiel folgende Verfahrensschritte gemäß der Figur 4 durchgeführt:
Im Schritt S1 wird zunächst die Vorrichtung V in den Bearbeitungsraum gebracht und dort in einer gewünschten Lage, z. B. an einem Bearbeitungstisch, vergleichsweise grob positioniert.

Danach wird im Schritt S2 ein Taster in den Werkzeughalter der Bearbeitungsmaschine eingespannt und es werden mehrere zuvor definierte Punkte am Gehäuse 6 angetastet um deren Position zu bestimmen. Dieser Prozessschritt wird mit Hilfe eines in der Steuerung C hinterlegten Zyklus ausgeführt, der dem Grunde nach im Zusammenhang mit der üblichen Vermessung einer Position eines Werkstück-Rohlings vorbekannt ist. Die absoluten Positionen der angetasteten Punkte werden mit Hilfe der Positionsmessgeräte Jx, Jy, Jz ermittelt. Die so erzeugten Positionswerte Vx, Vy, Vz der Vorrichtung V werden der Steuerung C zugeführt. In Kenntnis der exakten Maße der Vorrichtung V können nun im Schritt S21 im Koordinatensystem der Bearbeitungsmaschine die Referenzkoordinaten Vmx, Vmy, Vmz der Mitte des Bildsensors 2 sowie die Ausrichtung OT der ersten Achse T bestimmt werden. Wenn die Vorrichtung V permanent im Bearbeitungsraum der Bearbeitungsmaschine verbleibt, ist eine Bestimmung der Positionswerte Vx, Vy, Vz und damit der Schritt S21 nur einmal nach der Montage der Vorrichtung V im Bearbeitungsraum erforderlich. Dementsprechend kann unter diesen Voraussetzungen also direkt nach dem Schritt S2 der Schritt S3 eingeleitet werden.

Nachdem der Taster wieder aus dem Werkzeughalter der Bearbeitungsmaschine entfernt worden ist, wird in dem darauffolgenden Schritt S3 ein Referenzkörper in den Werkzeughalter eingespannt. Von diesem Referenzkörper, der beispielsweise eine im Wesentlichen zylindrische Gestalt aufweist und parallel zu dessen Längsachse und in Umfangsrichtung über schneidenartige Kanten verfügt, sind die genauen Abmessungen Dr, Hr bekannt. Nun wird der Referenzkörper unter Berücksichtigung der ermittelten Referenzkoordinaten Vmx, Vmy, Vmz der Mitte des Bildsensors 2 sowie die Ausrichtung OT der ersten Achse T in die vorgesehene Messposition gebracht, wobei bei der Referenzmessung der Werkzeughalter mit dem Referenzkörper vorzugsweise rotiert. In Kenntnis der Referenzkoordinaten Vmx, Vmy, Vmz der Mitte des Bildsensors 2 ist eine Bestimmung des Durchmessers Drm und der Höhe Hrm des Referenzkörpers möglich, analog zu dem Vorgehen, das weiter unten im Zusammenhang mit dem Schritt S4 erläutert wird. Auf Basis der bekannten Abmessungen Dr, Hr und der gemessenen Abmessungen Drm, Hrm des Referenzkörpers können im Schritt S31 Korrekturwerte Qx, Qy, Qz bestimmt und abgespeichert werden, welche die Information der exakten Lage des Werkzeughalters beziehungsweise der Werkzeugachse A relativ zur Mitte des Bildsensors 2 mit den Referenzkoordinaten Vmx, Vmy, Vmz beinhaltet. Dadurch, dass die beschriebene Bestimmung der Korrekturwerte Qx, Qy, Qz bei rotierendem Referenzkörper beziehungsweise bei rotierendem Werkzeughalter erfolgt, werden implizit später auch Fehler im Zusammenhang mit der Bewegung um die Werkzeugachse A berücksichtigt.

Nun kann der Referenzkörper im Magazin der Bearbeitungsmaschine abgelegt werden und das zu vermessende Werkzeug W in den Werkzeughalter eingespannt werden.

Der Bediener der Bearbeitungsmaschine kann im Schritt S32 auswählen, ob er vor der eigentlichen Bestimmung der Abmessungen D, H des Werkzeuges W eine qualitative Begutachtung des Werkzeuges W vornehmen möchte, zum Beispiel um zu überprüfen, ob die Schneiden S Beschädigungen aufweisen. Wenn eine qualitative Begutachtung gewählt wird, folgt der Schritt S41. Im Schritt S41 wird das Werkzeug W zunächst in den Bereich der zweiten Bilderfassungseinheit 7 gefahren. Für die Positionierung werden zuvor die Nenn-Abmessungen Dn, Hn des Werkzeuges W aus einer in der Steuerung C hinterlegten Tabelle geholt und in die Auswerteeinheit 10 eingelesen. In der gewünschten Position wird dann ein Bild des Werkzeuges W sozusagen von unten parallel zur z-Richtung erfasst und an einem Display angezeigt. Danach wird das Werkzeug W im Schritt S42 vor dem Bildsensor 2 positioniert und die dritte Lichtquelle 4 sowie das erste Ringlicht 3 eingeschaltet. Das Werkzeug W wird in Rotation versetzt und gegebenenfalls in der z-Richtung bewegt. Die vom Bildsensor 2 erzeugten Bilder können am Display begutachtet werden, so dass entschieden werden kann, ob das Werkzeug W noch für eine Bearbeitung eines Werkstückes geeignet ist oder nicht. Falls nicht, kann an dieser Stelle abgebrochen und ein alternatives Werkzeug überprüft werden. Wenn das Werkzeug W in ordnungsgemäßem Zustand ist, kann mit der eigentlichen Bestimmung der Abmessungen D, H des Werkzeuges W begonnen werden.

Falls eine qualitative Begutachtung des Werkzeuges W im Schritt S32 nicht gewählt wurde, erfolgt unmittelbar nach dem Schritt S32 das Auslesen der Nenn-Abmessungen Dn, Hn (im Falle eines neuen Werkzeuges W) oder der vor der letzten Bearbeitung gemessenen Abmessungen des Werkzeuges W aus einer in der Steuerung C hinterlegten Tabelle. Darauffolgend wird eine entsprechende Positionierung des Werkzeuges W vor dem Bildsensor 2 vorgenommen und die erste Lichtquelle 1 eingeschaltet. Im vorgestellten Ausführungsbeispiel rotiert das Werkzeug W während der Messung im Schritt S4. Im Betrieb der Vorrichtung V emittiert die erste Lichtquelle 1, hier eine Laserlichtquelle, mit Hilfe der kollimierenden Optik 1.1, Licht parallel zur ersten Achse T. Die zweite Achse Y, die orthogonal zum Bildsensor 2 verläuft, also die optische Achse bezogen auf den Bildsensor 2 darstellt, ist relativ zur ersten Achse T geneigt angeordnet. Auf diese Weise entsteht eine Dunkelfeldbeleuchtung. Das von der ersten Lichtquelle 1 emittierte Licht trifft auf die Schneide S des Werkzeuges W. Licht, das von der Schneide S reflektiert wird, erzeugt auf dem Bildsensor 2 gemäß der Figur 5 aneinandergereihte Lichtpunkte L beziehungsweise Reflexbänder. Die Figur 5 zeigt die Lichtpunkte L, die durch Reflexion am linken unteren Ende (siehe die Figur 2) des rotierenden Werkzeuges W, entstehen. Da es sich hier um eine Dunkelfeldbeleuchtung handelt, ist das reale Bild gegenüber der Darstellung in der Figur 5 invertiert, entsprechend liegen in der Realität helle Lichtpunkte L vor einem dunklen Hintergrund vor.

Das Bild wird nun entlang der Lichtpunkte L mit einem Inkrement beziehungsweise mit einer Rasterung einer Pixelbreite abgescannt. Der jeweilige Abstand zwischen zwei benachbarten gestrichelten Linien in der Figur 5 entspricht demnach einer Pixelbreite, die im vorgestellten Ausführungsbeispiel 8 µm beträgt. Insbesondere wird denjenigen Lichtpunkten L, welche in der im Wesentlichen in x-Richtung verlaufenden Reihe sind, in dem entsprechenden Raster jeweils eine z-Position zugeordnet. Die Ist-Position des Werkzeuges W in z-Richtung wird durch das Positionsmessgerät Jz der Bearbeitungsmaschine gemessen und das entsprechende Positionssignal Pz erzeugt. Es kann also nun festgestellt werden wo sich die Lichtpunkte L bezogen auf das Koordinatensystem im Bearbeitungsraum der Bearbeitungsmaschine befinden. In Verbindung mit den Ergebnissen der zuvor durchgeführten Referenzmessungen, insbesondere unter Berücksichtigung des Korrekturwertes Qz, kann der absolute Wert jeder z-Position zL im Koordinatensystem der Bearbeitungsmaschine mit sehr hoher Genauigkeit festgelegt werden.

Mit den jeweiligen z-Positionen zL als Eingangswerte wird in der Auswerteeinheit 10 eine Ausgleichsrechnung durchgeführt, aus der ein Spline beziehungsweise eine geglättete Linie gz gemäß der Figur 5 resultiert. Der Punkt Gz mit der Position z0 auf der Linie gz, der den kleinsten z-Wert aufweist, im vorgestellten Ausführungsbeispiel der äußerste linke Punkt der Linie gz, ist maßgeblich für die Bestimmung der Abmessung H der Länge des Werkzeuges W. Das Werkzeug W ist bezüglich der z-Richtung in einer definierten Lage im Werkzeughalter eingespannt. Zudem ist die Position Pz in z-Richtung des Werkzeughalters durch das Positionsmessgerät Jz bekannt. Unter Berücksichtigung des Korrekturwertes Qz kann so die relative Position zwischen der abspeicherten Referenzkoordinate Vmz und der Position z0 des Punktes Gz auf dem Bildsensor 2 exakt bestimmt werden.

Ähnlich wird die Abmessung D bestimmt, wobei das Werkzeug W während der Messung rotiert. Weil die Ist-Position des Werkzeuges W durch das Positionsmessgerät Jx bestimmt und ein entsprechendes Positionssignal Px, an die Auswerteeinheit 10 gesendet wird, kann nun kann der Radius R und damit die Abmessung D des Durchmessers des Werkzeuges W unmittelbar nach der Bestimmung der Position x0 des Punktes Gx auf dem Bildsensor 2 bestimmt werden. Zur Erhöhung der Genauigkeit wird die Lage der Werkzeugachse A durch den Korrekturwert Qx korrigiert.

Es wird auch hier in der Auswerteeinheit 10 eine Ausgleichsrechnung durchgeführt, aus der mit den jeweiligen x-Positionen xL als Eingangswerte eine geglättete Linie gx erzeugt wird. Der Punkt Gx mit der Koordinate beziehungsweise Position x0 auf der Linie gx, der den kleinsten x-Wert aufweist, ist maßgeblich für die Bestimmung der Abmessung D des Durchmessers. In der Auswerteeinheit 10 wird die abgespeicherte Referenzkoordinate Vmx mit der Position x0 kombiniert, insbesondere wird eine Differenz (Vmx-x0) gebildet, wobei durch diese Kombination die Abmessung D des Durchmessers des Werkzeuges W bestimmt wird.

Die Erfindung wurde anhand eines Werkzeuges W in Form eines Schaftfräsers beschrieben. Es können aber ebenso Aufsteckfräser vermessen werden Gleichermaßen kann die Erfindung bei Radiusfräsern, Winkelfräsern, Prismenfräsern usw. angewendet werden, wobei je nach Bauart unterschiedliche Reflexbänder beziehungsweise Reihen von Lichtpunkten entstehen. Die Erfindung ist darüber hinaus auch bei anderen Werkzeugen mit Schneiden anwendbar, beispielsweise bei Bohrwerkzeugen.

## Patentansprüche

1. Verfahren zur Bestimmung einer Abmessung (D, H) eines Werkzeuges (W) mit Schneiden (S) mit Hilfe einer Vorrichtung (V), die eine erste Lichtquelle (1), einen Bildsensor (2) und eine Auswerteeinheit (10) umfasst, wobei
durch die Lichtquelle (1) Licht parallel zu einer ersten Achse (T) emittiert wird und dem Bildsensor (2) eine zweite Achse (Y) zuordenbar ist, welche orthogonal zum Bildsensor (2) verläuft, wobei die erste Achse (T) und die zweite Achse (Y) zueinander geneigt angeordnet sind, wobei weiterhin
das von der ersten Lichtquelle (1) emittierte Licht von der Schneide (S) des Werkzeuges (W) so reflektiert wird, dass durch das reflektierte Licht auf dem Bildsensor (2) aneinandergereihte Lichtpunkte (L) erzeugt werden, wobei
durch die Auswerteeinheit (10) Positionen (xL, zL) der Lichtpunkte (L) bestimmt werden und die Abmessung (D, H) des Werkzeuges (W) basierend auf den Positionen (xL, zL) der Lichtpunkte (L) bestimmt werden, **dadurch gekennzeichnet, dass** wobei
- vor der Bestimmung der Abmessung (D, H) des Werkzeuges (W) ein Referenzkörper mit einem Werkzeughalter der Bearbeitungsmaschine verbunden und mit Hilfe des Bildsensors (2) vermessen wird,
- während der darauffolgenden Bestimmung der Abmessung (D, H) des Werkzeuges (W) das Werkzeug (W) mit dem Werkzeughalter der Bearbeitungsmaschine verbunden ist und basierend auf den Ergebnissen der Vermessung des Referenzkörpers ein Korrekturwert (Qx, Qy, Qz) gebildet wird, welcher die Information der exakten Lage des Werkzeughalters relativ zu Referenzkoordinaten (Vmx, Vmy, Vmz) des Bildsensors (2) beinhaltet,
- die Abmessung (D, H) des Werkzeuges (W) basierend auf den Positionen (xL, zL) der Lichtpunkte (L) unter Berücksichtigung des Korrekturwerts (Qx, Qy, Qz) bestimmt werden.

2. Verfahren gemäß dem Anspruch 1, wobei die Abmessung (D, H) basierend auf den Positionen (xL, zL) der Lichtpunkte (L) mit Hilfe einer Ausgleichsrechnung bestimmt werden.

3. Verfahren gemäß dem Anspruch 1 oder 2, wobei die Vorrichtung (V) in einem Bearbeitungsraum montiert wird und darauffolgend Positionswerte (Vx, Vy, Vz), durch die eindeutig für die Position der Vorrichtung (V) im Bearbeitungsraum bestimmt ist, ermittelt werden, wobei basierend auf den Positionswerten (Vx, Vy, Vz) Referenzkoordinaten (Vmx, Vmy, Vmz) für die Position des Bildsensors (2) und die Orientierung (OT) der ersten Achse (T) im Bearbeitungsraum bestimmt werden.

4. Verfahren gemäß einem der vorhergehenden Ansprüche, wobei das Werkzeug (W), insbesondere dessen Schneide (S) zusätzlich zur Bestimmung der Abmessungen (D, H) qualitativ begutachtet wird.

5. Verfahren gemäß einem der vorhergehenden Ansprüche, wobei die Vorrichtung (V) eine zweite Bilderfassungseinheit (7) umfasst, die einen zweiten Bildsensor aufweist, dem eine dritte Achse (Z) zuordenbar ist, welche orthogonal zum zweiten Bildsensor und zur zweiten Achse (Y) verläuft, wobei das Werkzeug (W), insbesondere dessen Schneide (S) zusätzlich zur Bestimmung der Abmessungen (D, H) qualitativ begutachtet wird.

6. Verfahren gemäß einem der vorhergehenden Ansprüche, wobei der Referenzkörper Schneiden oder schneidenartige Kanten aufweist.

7. Verfahren gemäß dem Anspruch 6, wobei der Referenzkörper eine im Wesentlichen zylindrische Gestalt aufweist und parallel zu dessen Längsachse und in Umfangsrichtung die schneidenartigen Kanten aufweist.

## Claims

1. Method for determining a dimension (D, H) of a tool (W) with cutting edges (S) by means of a device (V) comprising a first light source (1), an image sensor (2) and an evaluation unit (10), wherein
light is emitted parallel to a first axis (T) by the light source (1) and a second axis (Y) is assignable to the image sensor (2), which axis runs orthogonally to the image sensor (2), wherein the first axis (T) and the second axis (Y) are arranged inclined relative to each other, wherein further
the light emitted by the first light source (1) is reflected by the cutting edge (S) of the tool (W) in such a way that the reflected light generates light points (L) arranged in a row on the image sensor (2), wherein positions (xL, zL) of the light points (L) are determined by the evaluation unit (10) and the dimension (D, H) of the tool (W) is determined based on the positions (xL, zL) of the light points (L), **characterized in that**
- before determining the dimension (D, H) of the tool (W), a reference body is connected to a tool holder of the processing machine and measured using the image sensor (2),
- during the subsequent determination of the dimension (D, H) of the tool (W), the tool (W) is connected to the tool holder of the processing machine and a correction value (Qx, Qy, Qz) is formed based on the results of the measurement of the reference body, with the correction value containing the information about the exact location of the tool holder relative to reference coordinates (Vmx, Vmy, Vmz) of the image sensor (2),
- the dimension (D, H) of the tool (W) is determined based on the positions (xL, zL) of the light points (L), taking into account the correction value (Qx, Qy, Qz).

2. Method according to Claim 1, wherein the dimension (D, H) is determined based on the positions (xL, zL) of the light points (L) by means of a compensation calculation.

3. Method according to Claim 1 or 2, wherein the device (V) is mounted in a processing space and subsequently position values (Vx, Vy, Vz) by means of which the position of the device (V) in the processing space is uniquely determined are ascertained, wherein, based on the position values (Vx, Vy, Vz), reference coordinates (Vmx, Vmy, Vmz) for the position of the image sensor (2) and the orientation (OT) of the first axis (T) in the processing space are determined.

4. Method according to any one of the preceding claims, wherein the tool (W), in particular its cutting edge (S), is qualitatively assessed in addition to the determination of the dimensions (D, H).

5. Method according to any one of the preceding claims, wherein the device (V) comprises a second image acquisition unit (7), which has a second image sensor, to which a third axis (Z) is assignable, which third axis runs orthogonally to the second image sensor and to the second axis (Y), wherein the tool (W), in particular its cutting edge (S), is qualitatively assessed in addition to the determination of the dimensions (D, H).

6. Method according to any one of the preceding claims, wherein the reference body has cutting edges or cutting-edge-like edges.

7. Method according to Claim 6, wherein the reference body has a substantially cylindrical shape and has the cutting-edge-like edges parallel to its longitudinal axis and in the circumferential direction.

## Revendications

1. Procédé pour déterminer une dimension (D, H) d'un outil (W) avec des arêtes de coupe (S) à l'aide d'un dispositif (V) qui comprend une première source de lumière (1), un capteur d'image (2) et une unité d'évaluation (10), dans lequel
de la lumière est émise par la source de lumière (1) parallèlement à un premier axe (T), et un deuxième axe (Y) est apte à être associé au capteur d'image (2), lequel s'étend orthogonalement au capteur d'image (2), le premier axe (T) et le deuxième axe (Y) étant agencés de manière inclinée l'un par rapport à l'autre, dans lequel en outre
la lumière émise par la première source de lumière (1) est réfléchie par l'arête de coupe (S) de l'outil (W) de telle sorte que des points lumineux (L) alignés sont générés par la lumière réfléchie sur le capteur d'image (2),
des positions (xL, zL) des points lumineux (L) sont déterminées par l'unité d'évaluation (10) et la dimension (D, H) de l'outil (W) est déterminée sur la base des positions (xL, zL) des points lumineux (L), **caractérisé en ce que**
- avant la détermination de la dimension (D, H) de l'outil (W), un corps de référence est relié à un porte-outil de la machine de traitement et mesuré à l'aide du capteur d'images (2),
- pendant la détermination suivante de la dimension (D, H) de l'outil (W), l'outil (W) est relié au porte-outil de la machine de traitement et, sur la base des résultats de la mesure du corps de référence, une valeur de correction (Qx, Qy, Qz) est formée, laquelle contient l'information de la position exacte du porte-outil par rapport à des coordonnées de référence (Vmx, Vmy, Vmz) du capteur d'images (2),
- la dimension (D, H) de l'outil (W) est déterminée sur la base des positions (xL, zL) des points lumineux (L) en tenant compte de la valeur de correction (Qx, Qy, Qz).

2. Procédé selon la revendication 1, dans lequel la dimension (D, H) est déterminée sur la base des positions (xL, zL) des points lumineux (L) à l'aide d'un calcul de compensation.

3. Procédé selon la revendication 1 ou la revendication 2, dans lequel le dispositif (V) est monté dans un espace de traitement, et dans lequel sont ensuite déterminées des valeurs de position (Vx, Vy, Vz) par lesquelles la position du dispositif (V) dans l'espace de traitement est déterminée de manière univoque, des coordonnées de référence (Vmx, Vmy, Vmz) pour la position du capteur d'image (2) et l'orientation (OT) du premier axe (T) dans l'espace de traitement étant déterminées sur la base des valeurs de position (Vx, Vy, Vz).

4. Procédé selon l'une des revendications précédentes, dans lequel l'outil (W), en particulier son arête de coupe (S), est expertisé qualitativement en plus de la détermination des dimensions (D, H).

5. Procédé selon l'une des revendications précédentes, dans lequel le dispositif (V) comprend une deuxième unité (7) d'acquisition d'images qui présente un deuxième capteur d'images auquel est apte à être associé un troisième axe (Z) qui s'étend orthogonalement au deuxième capteur d'images et au deuxième axe (Y), l'outil (W), en particulier son arête de coupe (S), étant expertisé qualitativement en plus de la détermination des dimensions (D, H).

6. Procédé selon l'une des revendications précédentes, dans lequel le corps de référence présente des arêtes de coupe ou de type tranchant.

7. Procédé selon la revendication 6, dans lequel le corps de référence a une forme sensiblement cylindrique, et présente, parallèlement à son axe longitudinal et dans la direction circonférentielle, les arêtes de type tranchant.
